# EUROPÄISCHE PATENTANMELDUNG

(11) **EP 0 648 567 A1**
(43) Veröffentlichungstag der Anmeldung: **19.04.1995**
(21) Anmeldenummer: 94115628.3
(22) Anmeldetag: 04.10.1994
(51) Int. Cl.: B23D 61/18

(54) **Schneidkörper bestücktes drahtartiges Sägeblatt**

(30) Priorität: 07.10.1993 DE 4334219
(71) Anmelder: DRAMET Draht und Metallbau GmbH, D-56276 Grossmaischeid (DE)
(72) Erfinder: Tomaszewski, Gerhard, D-56203 Höhr-Grenzhausen (DE)

(57) **Zusammenfassung**

Drahtartige Sägeblätter haben, insbesondere wenn sie über Rollen geführt umlaufen, zum einen das Problem, daß beim Sägen die Schneidkörner abnutzen und ausbrechen, zum anderen, daß sie einer hohen Biegewechselbelastung ausgesetzt sind und reißen.
Die Erfindung teilt das Sägeblatt, wie in Fig. 1 dargestellt, in eine nichtmetallische Tragader (1), eine metallische Trägerschicht (2) und in die Beschichtung (3) mit Schneidkörpern (4), auf. Dadurch erhält man eine von der Beschichtung unbeeinflußte reißfeste Tragader und eine auf bestmögliche Anbindung der Schneidkörper optimierte Beschichtung. Das Ergebnis ist eine hohe Standzeit des Werkzeugs.

## Beschreibung

Mit schneidkörperbestückten Drähten oder Seilen, Werkstücke zu schneiden ist Stand der Technik. Dabei wird das Werkzeug entweder oszilierend "hin und her" bewegt, oder es läuft über Rollen geführt fortlaufend um. Letzteres hat den Vorteil, daß höhere Schnittgeschwindigkeiten erreicht werden. Problematisch ist jedoch, daß das Werkzeug, während es über die Rollen umläuft, einer ständigen Biegewechselbelastung ausgesetzt ist. Da Seile diese Belastung besser ertragen als ein Draht gleiche Dicke, werden sie hier überwiegend eingesetzt.
Gute Schneidleistungen werden mit Seilsägen jedoch nur erreicht, wenn das Seil mit Schneidkörpern bestückt ist. Es sind unterschiedliche Verfahren bekannt, die Schneidkörper am Seil anzubringen; z.B. Aufkleben, Auflöten, galvanisches Anbinden sowie das Auffädeln vorgefertigter Schneidhülsen.

Das Problem beim Auflöten oder galvanischen Anbinden der Schneidkörper ist, daß die Festigkeit des Seiles während des Anbindevorganges herabgesetzt wird:
Beim Auflöten wird das Sägeseil auf Löttemperatur erhitzt. Die beim Hartlöten (beim Weichlöten ist die Anbindung der Schneidkörper ungenügend) notwendige Löttemperatur führt bei Stahlwerkstoffen zur Rekristallisation. Für die heute üblicherweise eingesetzten Stahlseile ist dies sehr nachteilig, da sie aus Stahldraht bestehen, der herstellungsbedingt kaltverfestigt ist. Dem für die Reißfestigkeit des Drahtes vorteilhaften Effekt der Kaltverfestigung wirkt die Rekristallisation entgegen.

Werden Schleifkörper galvanisch angebunden, so tritt eine Versprödung des Sägeseils ein. Stand der Technik ist, daß dies durch Einlagerung von Wasserstoff im Metall geschieht.

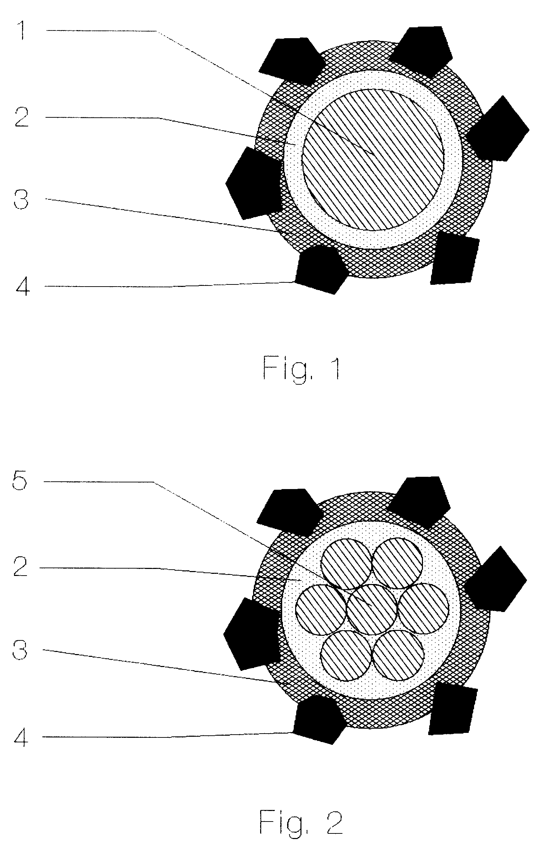

Erfindungsgemäß begegnet man der Beschichtungsproblematik, indem, wie in Anspruch 1 formuliert, die Tragader (1) so hergestellt wird, daß sie beim Anbinden der Schneidkörper ihre Reißfestigkeit beibehält. Das geschieht dadurch, daß innerhalb der Tragader (1) ein nichtmetallischer Werkstoff die Reißfestigkeit des Sägeblattes bestimmt. Es gibt verschiedene Möglichkeiten die Tragader (1) herzustellen. Beispielsweise können, wie in Fig. 1 dargestellt,
- eine einzelne nichtmetallische Ader (1), oder wie Fig. 2 zeigt,
- mehrere miteinander verseilte, nichtmetallische Litzen (5) und
- mehrere miteinander verseilte, nichtmetallische und metallische Litzen (5),
verwendet werden. Gegebenenfalls können, wie es beispielsweise bei Verwendung von unbeschichteten Faserwerkstoffen nötig ist, die komplette Tragader (1), oder auch die Litzen (5) mit einem Überzug, z.B. einem Kleber, gegen Ausfasern geschützt werden.

Damit das Sägeblatt hohe Schnittleistungen erreicht, soll ermöglicht werden, Schneidkörper aufzulöten, oder galvanisch anzubinden. Dazu ist eine metallische Trägerschicht (2) notwendig.

Diese Schicht kann auf verschiedene Arten hergestellt werden, z.B:
- Aufdampfen der Trägerschicht (2) auf die Tragader (1), oder
- Umwickeln der Tragader (1) mit einem oder mehreren Stahldrähten oder -Bändern.

Die Trägerschicht (2) dient als Angriffsfläche für die Beschichtung (3). Sie darf während des Beschichtungsprozesses verspröden oder rekristallisieren, da sie nicht die Reißfestigkeit des Sägeblattes garantieren muß. Die Beschichtung (3) kann somit, auf eine bestmögliche Anbindung der Schneidkörper hin, optimiert werden. Als Schneidkörper (4) werden bekannte Materialien eingesetzt, z.B. Hartmetallsplitt, Diamanten oder vorgefertigte (z.B. gesinterte) Schneidkörper.

Läuft das schneidkörperbestückte Sägeblatt beim Sägen über Rollen "endlos" um, so hängt die erreichbare Standzeit des Werkzeuges von den Schneidkörpern, deren Anbindung und der Reißfestigkeit des Sägeblattes ab. Die Reißfestigkeit wird durch die Tragader und durch deren Verbindung zu einer Schlaufe beeinflußt. Die Herstellung der endlosen Schlaufe erfolgt nach bekannten Verfahren.

Ganz besonders wird das Sägeblatt dadurch beansprucht, daß es bei jedem Umlauf über die Rollen gebogen und anschließend gestreckt wird. Die dabei auftretende Biegewechselbelastung ist um so geringer, je geschmeidiger das Sägeblatt ist. Die Geschmeidigkeit des Sägeblattes lässt sich steigern, wenn die Beschichtung unterbrochen aufgebracht wird. Dabei kann die Trägerschicht und die Beschichtung, oder nur die Beschichtung, unterbrochen sein.

Die Erfindung ermöglicht es, ein geschmeidiges Sägeblatt herzustellen, das reißfest ist und dessen Schneidkörner optimal angebunden werden. Eine hohe Standzeit des Sägeblattes auch auf konventionellen Bandsägen ist so erreichbar.

### Bezeichnungsliste

- 1: Tragader
- 2: Trägerschicht
- 3: Beschichtung
- 4: Schneidkörper
- 5: Litzen

## Patentansprüche

1. Schneidkörperbestücktes drahtartiges Sägeblatt dadurch gekennzeichnet, daß die Reißfestigkeit durch einen nichtmetallischen Werkstoff innerhalb der drahtartigen Tragader (1) gewährleistet wird und daß ein metallischer Werkstoff als Trägermaterial (2) für die Beschichtung (3) dient.

2. Sägeblatt nach Anspruch 1 dadurch gekennzeichnet, daß die Tragader (1) aus mindestens 2 verseilten Litzen (5) besteht.

3. Sägeblatt nach Anspruch 1 oder 2 dadurch gekennzeichnet, daß ein Faserverbundwerkstoff die Reißfestigkeit sicherstellt.
